Europäisches Patentamt

European Patent Office

Office européen des brevets

(11) Publication number: **0 408 809 A1**

# EUROPEAN PATENT APPLICATION

(21) Application number: 89307332.0

(22) Date of filing: 19.07.89

(51) Int. Cl.⁵: **B64F 1/32**, B65G 47/50

(43) Date of publication of application:
23.01.91 Bulletin 91/04

(84) Designated Contracting States:
**DE FR GB**

(71) Applicant: **HUDSON SOFT CO., LTD.**
**No. 7-26, Hiragishi Sanjo Toyohira-Ku**
**Sapporo-shi Hokkaido(JP)**

(72) Inventor: **Nakano, Tadahiro**
**Highhome Honjin 102 No. 9-11-102,**
**Toyohisacho**
**Shinjuku-Ku Tokyo(JP)**
Inventor: **Manabe, Toshiyuki**
**No. 7186-14, Tsujido**
**Fujisawa-Shi Kanagawa-Ken(JP)**

(74) Representative: **Hackett, Sean James et al**
**Marks & Clerk 57-60 Lincoln's Inn Fieldslds**
**London WC2A 3LS(GB)**

(54) Baggage managing system.

(57) A baggage managing system for controlling acceptance, loading and delivery of baggage by a baggage number recorded on a boarding pass and a baggage tag in which the system comprises a reading part (2) for reading the boarding pass recorded with boarding information including at least a transportation service name and a seat number, an inputting part (1) for inputting a piece number of baggages accepted in correspondence to the boarding pass, a number issuing part (1) for issuing the baggage number which is generated by adding the piece number of baggages inputted by the inputting part to the seat number of the boarding pass read by the reading part, a boarding pass recording part (2) for recording the baggage number obtained by the number issuing part on the boarding pass, a tag recording part (3) for recording the baggage number obtained by the number issuing part on a tag attached to each baggage respectively, and a baggage number storing part (1) for storing at least all baggage numbers in the order of the number issued by the number issuing part.

EP 0 408 809 A1

# BAGGAGE MANAGING SYSTEM

The present invention generally relates to baggage managing systems, and more particularly to a baggage managing system for transporting passenger's checked-in baggages separately from the passenger and returning them to the passenger at the destination.

Conventional baggage managing system adopted by air lines generally operates as follows. An air line company receives baggages of a passenger one by one at a baggage check-in counter and issues a tag having a sequential number corresponding to a flight service and delivers a half slip of the tag to the passenger. The passenger finds out his baggages at the destination and brings them to a baggage claim counter with the half slip. A counter officer identifies the sequential number of the tag and the slip for each baggage and returns the identified baggage to the passenger.

In the conventional system, a tag number of a baggage is issued sequentially irrespective of a boarding pass of a passenger, and there have been following problems. That is, the passenger must keep a half slip of the tage thoughout the trip which is apt to be lost, it takes time to find out his own baggage at the destination, and there is a substantial chance that one takes a wrong baggage. And further, it is needed some experties to make identification of the sequential number between the tag of the baggage and its half slip at the baggage claim counter.

Further, there are additional problems in view of preventing bomb-terrorism. Thus, in a case a passenger who checked in a baggage at the baggage accepting counter did not get on board the corresponding flight, it is preferrable to take out this baggage from that flight service. However, in fact, as the number of his boarding pass and the sequential number of the tag attatched to his baggage do not correspond, it is difficult to find out that baggage so as to take it out from that flight service. Thus, there is practionlly no alternative but to fly the airplane to the destination with carrying the baggage which belongs to the passenger who did not get on board that flight service.

The present invention, therefore, has an object to provide a novel and useful baggage managing system in which the above-mentioned problems are solved.

The present invention has an object to provide a baggage managing system comprising reading means for reading out information of the boarding pass on which are recorded with information including at least the flight service number and the seat number of the passenger; input means for inputting a piece number of baggages accepted with corresponding to the boarding pass; number issuing means for issuing a baggage number by attaching the piece number of the baggages which was inputted by input means, tc the seat number of the boarding pass which was read out by the reading means; boarding pass recording means for recording the baggage number obtained by number issuing means, on the boarding pass; tag recording means for recording the baggage number on each tag to be attached to each of the baggages; and baggage number storing means for storing at least all baggage numbers according to the sequence of the number issued by number issuing means, and thus, acceptance, loading and delivery of the baggage are managed by the serial numbers of the boarding pass and the tag respectively.

According to the present invention, there is nothing to do beyond just to keep the boarding pass for the passenger, and therefore, because the piece number of tickets or the like becomes less, there will be few possibility of losing tickets or the like. Also, checking the baggage number at the place of picking up and delivering the baggage becomes easy and simple, because the seat number of the passenger is used as a part of the baggage number.

Other object of the present invention is to provide a baggage managing system designed so that the system further comprises tag reading and stroing means for reading and storing the baggage number recorded on the tag, which number includes the number of the baggage lastly loaded in each container when baggages are loaded in a plurality of containers according to the sequence of the number issued by number issuing means.

According to the present invention, it can be known to what extent baggages have been loaded in each container.

Still other object of the present invention is to provide a baggage managing system designed so that the system further comprises extracting means for extracting the baggage number including a specified seat number among the baggage numbers stored in baggage number storing means; and container determining means for determining the container in which the baggage having the baggage number extracted by extracting means is loaded, on the bais of the baggage number which was stored in the tag reading and storing means.

According to the present invention, the baggage of the passenger who did not get on board the flight service, is easily found out, and it is effective to avoid the bomb-terroism.

Still other object of the present invention is to provide a baggage managing system designed so that the system further comprises baggage number reading means for reading the baggage number recorded on the boarding pass and the tag respectively, and discriminating means for discriminating correspondence or discrepancy between the baggage number of the boarding pass and the baggage number of the tag which were respectively read out by baggage number reading means.

According to the present invention, checking the baggage against the baggage number when the baggage is delivered, is automated and simplified.

Still other object of the present invention is to provide a baggage managing system designed so that the system further comprises correspondence mark recording means for recording a mark indicating establishment of correspondence on the tag when correspondence discriminating means has discriminated correspondence.

According to the present invention, correspondence of the result of the checking can be clearly known by the mark, and the checking operation becomes further simplified.

Still other object of the present invention is to provide a baggage managing system designed so that the system further comprises error indicating means for indicating the error when correspondence discriminating means has discriminated discrepancy.

According to the present invention, discrepancy of the result of the checking is indicated and the checking operation becomes further simplified.

Further, other objects and features of the present invention will be cleared by description of the present invention with referring to drawings.

FIG.1 is a view showing a system construction of an embodiment according to the present invention;

FIG.2 is a view showing a flow chart of the embodiment in which a check-in computer carries out a processing;

FIG.3 is a plan view of the boarding pass according to the embodiment;

FIG.4 is a plan view of the tag according to the embodiment;

FIG.5 is a view showing a system construction of an embodiment according to an additional system.

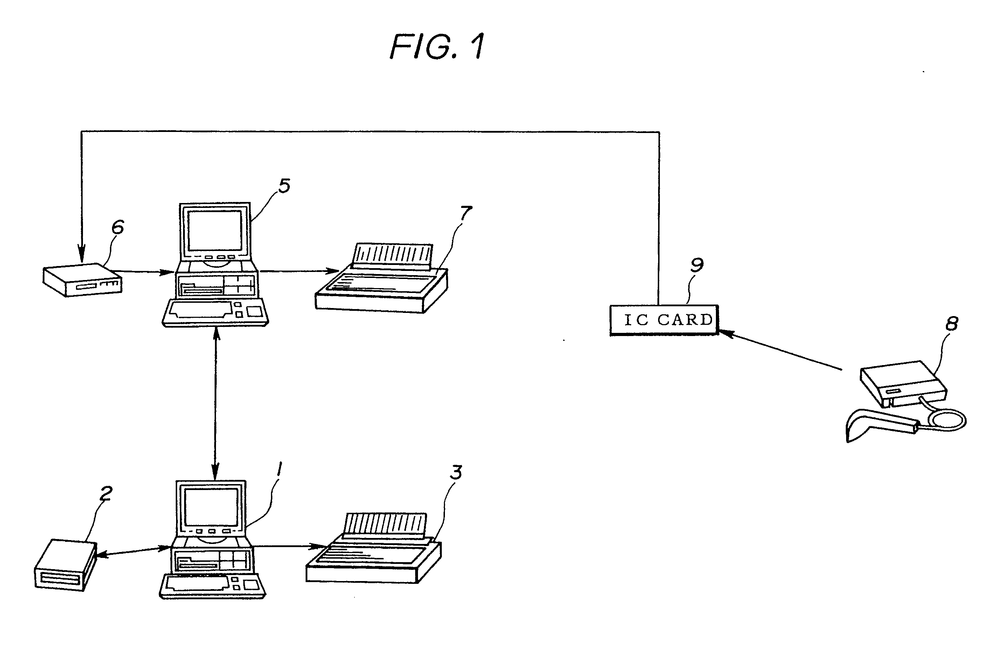

FIG.1 shows the system construction of an embodiment of the baggage managing system according to the present invention.

In FIG.1, a numeral 1 denotes a check-in computer. The check-in computer 1 comprises a computer body, a CRT display, a disc apparatus, a key board, and the like. A boarding pass reading and writing device 2 and a printer 3 are connected to the check-in computer 1. Above-mentioned machines and apparatuses are installed on a baggage check-in counter.

A controlling computer 5 comprises a computer body, a CRT display, a disc apparatus, a key board, and the like. The controlling computer 5 is connected to an IC card reader 6 and a printer 7, and also to the check-in computer 1.

A bar code reading apparatus 8 is used at a place where the baggage is loaded in a cargo-container, and reads a bar code of the cargo-container and a bar code attached to the tag, to store them in an IC card 9 which is used as a non-volatile memory accommodated in the bar code reading apparatus 8. This IC card 9 is removed from the bar code reading apparatus 8 and is accommodated into the IC card reader 6.

The passenger exchanges the air ticket to the boarding pass and then checks the baggage with referring to the boarding pass at the baggage check-in counter. This boarding pass is recorded with several boarding information such as date, flight service number, destination, route, seat number or the like.

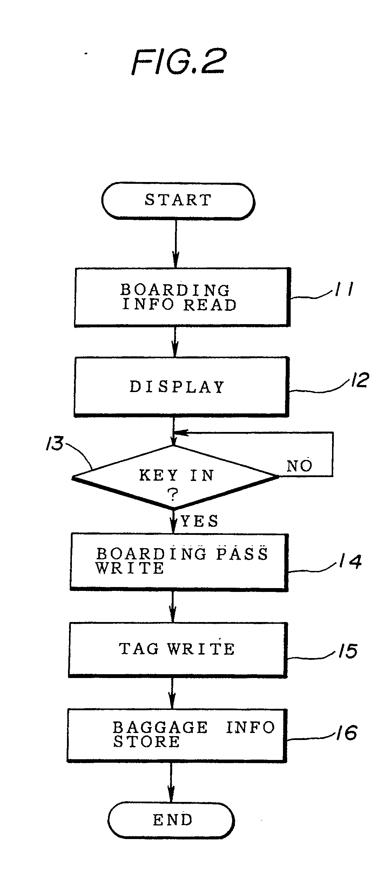

An officer of the air line company inserts the boarding pass into a boarding pass reading and writing apparatus 2, and the check-in computer 1 carries out a processing shown in FIG.2. In FIG.2, the boarding information of the boarding pass is read out at a step 11, and the information is displayed on the CRT display (step 12). After comfirmed the boarding information, when a piece number of the baggage is inputted by the key board, a step 13 discriminates this number, and then the next step comes.

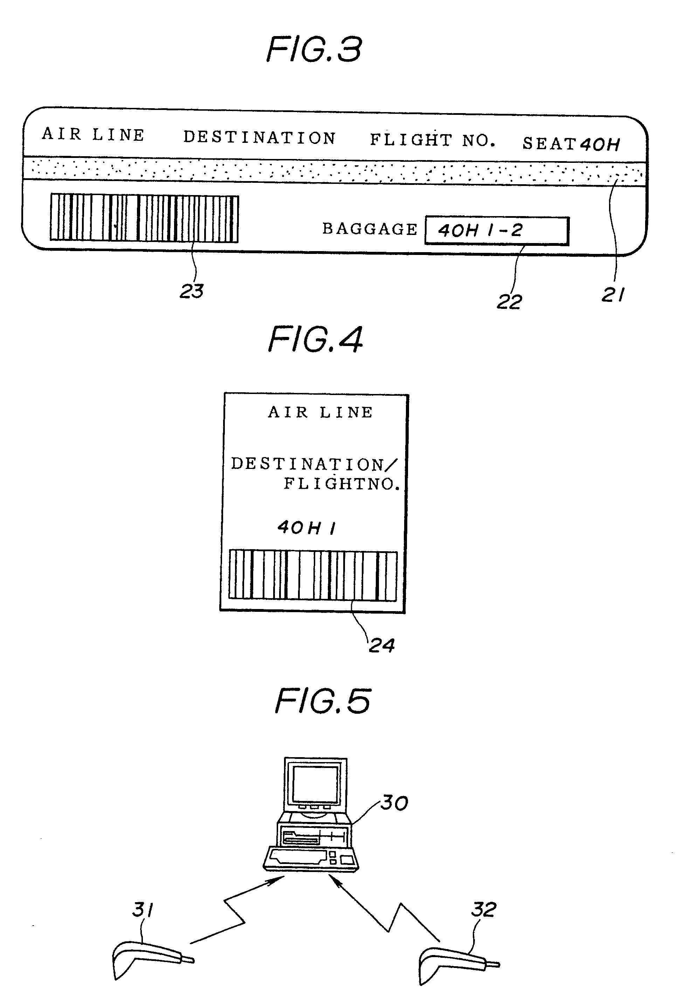

At a step 14, as shown in FIG.3, the baggage number is written in the boarding pass in a letter (arabic numeral) and the flight service number is written in the boarding pass in a bar code. In FIG.3, a numeral 21 denotes a magnetic recording part recorded with the boarding information, a numeral 22 denotes a letter recording part for recording the baggage number in a letter, a numeral 23 denotes a bar code recording part for recording the flight service number and the baggage number in a bar code. This baggage number is made by putting a number corresponding to a piece number of the baggage at a lower digits of the seat number. For example, when the seat number is "40H" and the baggage is one piece, the baggage number becomes "40H1", and when the piece number of the baggage is N, where N is an integral number of 2 or more than 2, the baggage number becomes "40H1 through 40HN".

Next, at a step 15, the printer 3 prints out a tag as shown in FIG.4, on which the flight service number and the baggage number are printed in letters and bar codes respectively. In FIG.4, a numeral 24 denotes a bar code recording part. In this case, because a tag is attached to a baggage, when a piece number of the baggages is N, N numbers of tag are printed out, of which lower digits of the seat number becomes 1 through N.

Thereafter, the boarding information is added with the baggage information such as the piece number of the baggages and the time of check-in, and those informations are stored into the disc apparatus provided with the check-in computer 1 (step 16). Thus, the procedure ends.

At the loading place, baggages conveyed thereto in the order of checking-in, are loaded into the container according to the order. When loading the baggages into each container has ended, the bar code of the tag attached to the last baggage and the bar code of the container number are read out by the bar code reading out apparatus 8, and is written into the IC card 9.

When the baggage checking-in and loading of the baggage into the container has ended, the boarding information and the baggage information are transferred to the controlling computer 5. At the same time, the IC card 9 is inserted into the IC card reader 6, and the boarded information is read out by the controlling computer 5. The controlling computer 5 adds the boarded information to the baggage information and controls those information by every flight service to display those on the CRT display and outputs as a list by the printer.

At the time of boarding procedure of the passenger, the magnetic recording part 2 of the boarding pass is read out and is inputted into a passenger control system of the air line company. The passenger control system controls issuing the boarding pass and extracts a passenger's name who has not got on board that flight service in spite of being issued with the boarding pass when the boarding procedure was closed. This extracted seat number of the passenger is conveyed to an officer of the control section of the air line company by a telephone, for example. The officer displays the baggage number including the seat number thus extracted, on the display of the controlling computer 5, and discriminates that the baggage of the passenger who did not get on board that flight service was loaded into what container, from the boarded information added to the baggage information when the passenger checked the baggage with that extracted seat number. As a result, it can become possible to identify the above-mentioned baggage in a short time period and take out the baggage from the identified container.

At the destination, the passenger pickes up his baggage among all baggages unloaded from the container. In this case, the passenger can easily find his baggage even it resembles to other person's baggage, because the baggage number of the tag of his baggage was made such that one digit, for example, is added to his seat number.

A computer 30 for the baggage delivery as shown in FIG.4 provided at the baggage claim counter. The computer 30 for baggage delivery comprises a computer body, a CRT display, a key board and the like, and wireless bar code reading and writing apparatuses 31 and 32 are belonged to the computer 30.

An officer of the baggage claim counter reads the bar code recording part 23 of the boarding pass of the passenger by the bar code reading and writing apparatuses 31 and 32. Then, the officer reads the bar code recording part 24 of the tag of the baggage. When both bar codes are coincided, a letter or mark such as "examined" is printed at the vicinity of the bar code recording part. When bar codes are not coincided, an error indication is displayed on the CRT display. When the above-mentioned checking is carried out, if the baggage number recorded on the boarding pass is "40H1 through 40HN", the baggage number of the tags "40H1" through "40HN" may be regarded as coincided.

As mentioned in above, at the baggage claim counter, there is nothing to do but to read the bar codes of the boarding pass and the tag for the officer by using the bar code reading and writing apparatuses 31 and 32, and is not needed particular expertial of the officer. Therefore, it becomes possible to save labor cost. Further, even when the computer 30 for baggage delivery is out of order or is not provided at the baggage claim counter, the officer can check them visually, because the flight service number and the baggage number are printed as letters on the boarding pass and the tag respectively, and the higher digits of the baggage number correspond to a seat number. Further, at the place of baggage checking, the baggage information at the time of departure is not necessary. Therefore, systems at the baggage checking-in place and the baggage claiming place may be made small respectively. As a result, an usual personal computer may be used for this purpose. At the same time, installing of the system of the present invention does not need extensive change of the existing passenger control system and its can be installed simply with minor modifications.

Further, the passenger has nothing to do beyond just to keep the boarding pass during on board the flight service and is not necessary to keep the half slip of the tag in addition to the boarding pass which has been necessary in the conventional case. Therefore, it becomes less possibility to lose the half slip of the tag.

Still further, it may be possible to record all baggage numbers per each baggage ("40H1 and 40H2", for example) on the letter recording part of the boarding pass.

Further, in a case where the passenger changes the seat after recorded the baggage number ("40H1, for example) on the boarding pass, the following procedure may be taken. That is, the baggage number itself recorded on the boarding pass and the tag is not changed, and thereafter, a new passenger who took the seat number "40H" is identified by marking an asterisk to the baggage number such as " 40H1" or the like. By doing such that, it becomes possible to discriminate these and the former boarding pass and the tag.

Further, it is possible to read the baggage number recorded by magnetic recording instead of recording and reading the baggage number on the boarding pass and the tag by recording the bar code. Also, it is possible to record and read the baggage number optically by a method such as a mark sheet, and it is not limited to the above-mentioned example.

Further, the above-mentioned example, described with referring to the baggage managing system in the air line business, is also applicable to a case where the baggage is controlled in business of long distance train, bus, or the like, and it is not limited to the above-mentioned example.

In short, there is few possibility to lose the ticket or the slip for the passenger because number of slips to be kept by the passenger becomes less, and it becomes simple to check the tag against the ticket when finding out and claiming the baggage, and it becomes effective to avoid the bomb-terrorism, or the like.

**Claims**

1. A baggage managing system for controlling acceptance, loading and delivery of baggage by a baggage number recorded on a boarding pass and a baggage tag respectively, characterized by reading means (2) for reading the boarding pass recorded with boarding information including at least a transportation service name and a seat number, inputting means (1) for inputting a piece number of baggages accepted in correspondence to said boarding pass, number issuing means (1) for issuing the baggage number which is generated by adding the piece number of baggages inputted by said inputting means to the seat number of the boarding pass read by said reading means, boarding pass recording means (2) for recording the baggage number obtained by said number issuing means on said boarding pass, tag recording means (3) for recording the baggage number obtained by said number issuing means on a tag attached to each baggage respectively, and baggage number storing means (1) for storing at least all baggage numbers in the order of the number issued by said number issuing means.

2. A baggage managing system as claimed in claim 1 characterized in that said boarding pass recording means (2) and said tag recording means (3) record the baggage number in a form of a letter or a bar code.

3. A baggage manageing system as claimed in claim 1 characterized in that said system further comprises tag reading and storing means (8, 9) for reading and storing the baggage number recorded on said tag, said tag reading and storing means reading and storing the baggage number of the baggage lastly loaded into each container when baggages are loaded into a plurality of containers in the order of the number issued by said baggage number issuing means (1).

4. A baggage managing system as claimed in claim 3 characterized in that said system further comprises baggage number extracting means (5) for extracting the baggage number including a specified seat number among the baggage numbers stored in said baggage number storing means (1), and container determining means (5) for determining the container which was loaded with the baggage having the baggage number extracted by said baggage number extracting means.

5. A baggage managing system as claimed in claim 1 further characterized by baggage number reading means (31, 32) for reading baggage numbers recorded on the boarding pass and tag respectively, and discriminating means (30) for discriminating correspondence or discrepancy between the baggage number of the boarding pass and the baggage number of the tag which were read out respectively by said baggage number reading means (31, 32).

6. A baggage managing system as claimed in claim 5 further characterized by correspondenced mark recording means (31, 32) for recording a mark indicating correspondence on the tag when said discriminating means (30) has discriminated a correspondence.

7. A baggage managing system as claimed in claim 5 further characterized by error indicating means (30) for indicating an error when said discriminating means (30) has discriminated a discrepancy.

# FIG. 1

EP 0 408 809 A1

# FIG.2

```
        ┌──────────────┐
        │    START     │
        └──────┬───────┘
               │
               ▼
     ┌─────────────────────┐
     │    BOARDING         │  ──  11
     │    INFO READ        │
     └─────────┬───────────┘
               │
               ▼
     ┌─────────────────────┐
     │     DISPLAY         │  ──  12
     └─────────┬───────────┘
               │
               ▼
      13 ◇─────────────────◇
         │     KEY IN      │  NO
         │       ?         │───┐
         ◇─────────────────◇   │
               │ YES          (loop back)
               ▼
     ┌─────────────────────┐
     │  BOARDING PASS      │  ──  14
     │  WRITE              │
     └─────────┬───────────┘
               │
               ▼
     ┌─────────────────────┐
     │    TAG WRITE        │  ──  15
     └─────────┬───────────┘
               │
               ▼
     ┌─────────────────────┐
     │  BAGGAGE  INFO      │  ──  16
     │  STORE              │
     └─────────┬───────────┘
               │
               ▼
        ┌──────────────┐
        │     END      │
        └──────────────┘
```

# FIG.3

| AIR LINE | DESTINATION | FLIGHT NO. | SEAT *40H* |

BAGGAGE  *40H 1-2*

23    22    21

# FIG.4

AIR LINE

DESTINATION/
FLIGHTNO.

*40H 1*

24

# FIG.5

30

31    32

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4711994 (GREENBERG)<br>* column 2, lines 5 - 19 *<br>* column 2, line 37 - column 5, line 37; figure 1 * | 1, 2, 5 | B64F1/32<br>B65G47/50 |
| Y | | 3, 4, 6, 7 | |
| X | EP-A-271022 (OMRON TATEISI ELECTRONICS)<br>* abstract; figures *<br>* column 1, line 51 - column 2, line 41 *<br>* column 3, line 30 - column 4, line 16 *<br>* column 4, line 51 - column 5, line 14 * | 1, 2 | |
| A | | 3-7 | |
| Y | US-A-3679874 (W.E.FICKENSCHER)<br>* abstract *<br>* column 1, lines 54 - 66 *<br>* column 2, lines 9 - 30 *<br>* column 3, line 26 - column 67 *<br>* column 4, line 60 - column 5, line 5; figure 1 * | 3, 4, 6, 7 | |
| Y | US-A-3695462 (SULLIVAN)<br>* abstract *<br>* column 1, line 54 - column 2, line 6 *<br>* column 2, lines 23 - 28 *<br>* column 4, lines 5 - 54 *<br>* column 10, lines 37 - 52; figures 1-5, 14 * | 3, 4 | TECHNICAL FIELDS SEARCHED (Int. Cl.5)<br><br>B64F<br>B65G<br>G07B |
| A | US-A-4634849 (KLINGEN)<br>* abstract; figures *<br>* column 2, line 63 - page 6, column 4, line 10 * | 1-7 | |
| A | PROCEEDINGS IECON'86. INDUSTRIAL APPLICATIONS OF MINI, MICRO & PERSONAL COMPUTERS. MILWAUKE, WI, USA. OCTOBER 1986. Vol. 1, Pages 189-194<br>* Page 189, paragraphs 1-3 * | 1 | |

The present search report has been drawn up for all claims

| Place of search | Date of completion of the search | Examiner |
|---|---|---|
| THE HAGUE | 15 MARCH 1990 | ESTRELA Y CALPE J. |